# EUROPÄISCHE PATENTSCHRIFT

(11) **EP 3 685 066 B1**
(45) Veröffentlichungstag und Bekanntmachung des Hinweises auf die Patenterteilung: **16.12.2020**
(21) Anmeldenummer: 18755784.8
(22) Anmeldetag: 13.08.2018
(51) Int. Cl.: F16D 65/12

(54) **MEHRTEILIGER BREMSENROTOR**
MULTI-PART BRAKE ROTOR
ROTOR DE FREIN EN PLUSIEURS PARTIES

(30) Priorität: 19.09.2017 DE 102017121633
(43) Veröffentlichungstag der Anmeldung: 29.07.2020
(73) Patentinhaber: SAF-HOLLAND GmbH, 63856 Bessenbach (DE)
(72) Erfinder: WEBER, Elmar, 48249 Dülmen (DE); NABER, Thomas, 48683 Ahaus (DE); WALLMEIER, Stefan, 63773 Goldbach (DE); ROOS, Michael, 97828 Marktheidenfeld (DE)
(74) Vertreter: Müller Schupfner & Partner Patent- und Rechtsanwaltspartnerschaft mbB
(86) Internationale Anmeldenummer: PCT/EP2018/071887
(87) Internationale Veröffentlichungsnummer: WO 2019/057399

(56) Entgegenhaltungen:
- EP-A1- 0 872 659
- DE-A1- 10 125 111
- DE-A1- 10 305 237
- DE-A1- 19 617 154
- DE-A1-102011 120 438
- GB-A- 1 080 035
- US-A1- 2008 149 435

## Beschreibung

Die vorliegende Erfindung betrifft einen mehrteiligen Bremsenrotor, insbesondere für Nutzfahrzeuge.

Bremsenrotoren für Nutzfahrzeuge sind grundsätzlich aus dem Stand der Technik - in Form von Bremsscheiben und Bremstrommeln - bekannt. Um vornehmlich die Kosten bei der Fertigung von Bremsenrotoren niedrig zu halten, sind auch mehrteilige Ausführungsformen von Bremsenrotoren aus dem Stand der Technik bekannt. Diesen mehrteiligen Ausführungsformen ist gemein, dass das Drehmoment durch Kraftschluss zwischen den einzelnen Elementen des Bremsenrotors übertragen wird. Diese Art der Momentenübertragung hat unter anderem den Nachteil, dass die einzelnen Bauteile des Bremsrotors bei hoch dynamischen Drehmomentschwankungen relativ zueinander verrutschen, wodurch es unter Umständen zu einem Versagen der Verbindung kommen kann. Ein solches Versagen ist jedoch aufgrund der sicherheitstechnischen Relevanz, welche den Bremsrotoren zukommt, möglichst zu vermeiden.

Die EP 0 872 659 A1 betrifft eine Bremsscheibe, die einen Reibring aufweist, der über Verbindungselemente mit einem Bremsscheibentopf verbunden ist.

Die DE 101 25 111 A1 betrifft eine Bremseinheit, die einen Reibring und ein Halteteil umfasst, wobei der Reibring und das Halteteil ein Verzahnungsprofil aufweisen.

Die DE 10 2011 120 438 A1 zeigt eine Bremsscheibe mit einem Reibring, welcher ein Verbindungselement, insbesondere einen Bremsscheibentopf, ein Radflansch oder eine Radnabe, außenumfangsseitig zumindest bereichsweise umgibt und welcher mit dem Verbindungselement radial durch eine Formschlussverbindung und axial durch wenigstens ein in einer radial innerhalb des Reibrings verlaufenden Aufnahmeöffnung aufgenommenen Sicherungselement verbunden ist.

Die GB 1 080 035 A zeigt eine Bremsscheibe für eine Scheibenbremsanordnung, wobei die Bremsscheibe eine Nabe, einen Reibring umgebend die Nabe und ein Verbindungsmittel zum Verbinden der Nabe und des Reibrings aufweist.

Es ist daher Aufgabe der vorliegenden Erfindung einen Bremsenrotor, insbesondere für Nutzfahrzeuge, bereitzustellen, welcher ein hohes Maß an Sicherheit bereitstellt.

Diese Aufgabe wird durch einen Bremsenrotor mit den Merkmalen des Anspruchs 1 gelöst. Bevorzugte Ausführungsformen ergeben sich aus den abhängigen Ansprüchen.

Erfindungsgemäß umfasst ein Bremsenrotor, insbesondere für Nutzfahrzeuge, zumindest ein Reibelement und ein Adapterelement, wobei der Bremsenrotor dazu ausgelegt ist, um eine Rotationsache zu rotieren, wobei das Reibelement zumindest eine Reibfläche und einen Verbindungsbereich aufweist, wobei das Adapterelement einen Montagebereich und einen Übertragungsbereich aufweist, wobei der Montagebereich dazu ausgelegt ist, den Bremsenrotor an einer Nabe festzulegen, wobei der Verbindungsbereich mittelbar oder unmittelbar derart formschlüssig in einer Umfangsrichtung mit dem Übertragungsbereich in Eingriff steht, dass zwischen dem Verbindungsbereich und dem Übertragungsbereich ein Drehmoment um die Rotationsachse von dem Reibelement auf das Adapterelement übertragbar ist. Ein Bremsenrotor der in Rede stehenden Art kann beispielsweise eine Trommel einer Bremstrommel oder auch eine Bremsscheibe einer Scheibenbremse sein. Die Rotationsachse kann insbesondere die Rotationsachse der Wellen oder der Achse sein, welche von dem Bremsrotor gebremst werden soll. Das Reibelement des Bremsenrotors ist dazu ausgelegt, mit einem weiteren Element - wie beispielsweise einem Bremsbelag - in Kontakt treten zu können, um ein Bremsmoment zu erzeugen. Die Fläche oder Flächen, welche zur Erzeugung eines Bremsmoments mit dem weiteren Element in Kontakt treten können, bilden die Reibflächen des Reibelements. Insbesondere kann das Reibelement dabei durch den Mantelbereich einer Bremstrommel oder dem Reibring einer innenbelüfteten oder nicht belüfteten Bremsscheibe gebildet sein. Der Verbindungsbereich des Reibelements dient dazu, Kräfte und/oder Momente von dem Reibelement auf das Adapterelement zu übertragen und kann somit insbesondere die Aufgabe übernehmen, dass Reibelement zu lagern. Der Übertragungsbereich des Adapterelements dient dazu, Kräfte und/oder Momente vom Reibelement aufzunehmen. In anderen Worten kann der Übertagungsbereich des Adapterelements somit eine Art Gegenstück oder Partner für den Verbindungsbereich des Reibelements bilden. Die Drehmomentübertragung erfolgt dabei derart, dass der Verbindungsbereich mit dem Übertragungsbereich mittelbar oder unmittelbar formschlüssig in Eingriff steht. Unter mittelbar oder unmittelbar formschlüssig im Eingriff kann verstanden werden, dass sich entweder die Übertragungsbereiche selbst formschlüssig in Umfangsrichtung mit den Verbindungsbereichen berühren oder, dass in der Wirkkette der Drehmomentübertragung zwischen dem Verbindungsbereich und dem Übertragungsbereich zumindest ein Formschluss in Umfangsrichtung vorhanden ist - beispielsweise über zwischengeschaltete Elemente. Durch diesen Formschluss wird ein hohes Maß an Sicherheit erreicht, da durch diese Art der Drehmomentübertragung auch hoch dynamisch schwankende Drehmomente sicher übertragen werden können. Das zu übertragende Drehmoment um die Rotationsachse (Bremsmoment) kann dabei zum überwiegenden Teil durch die formschlüssige Übertagung realisiert sein. Bevorzugt erfolgt die Drehmomentübertragung derart, dass der formschlüssig übertragene Anteil mehr als 95% des gesamten Drehmoments um die Rotationsachse ausmacht. Besonders bevorzugt erfolgt die Drehmomentübertragung um die Rotationsachse vollständig formschlüssig. Die Umfangsrichtung ist die polar um die Rotationsachse umlaufende Richtung oder auch Winkelkoordinate um die Rotationsachse. Der Montagebereich des Adapterelements dient insbesondere dazu, an einer Nabe oder Welle festgelegt zu werden. Hierzu ist es besonders zweckmäßig, wenn der Montagebereich zumindest bereichsweise rotationssymmetrisch um die Rotationsachse ausgebildet ist. Der Verbindungsbereich und der Übertragungsbereich können derart ausgestaltet sein, dass sich die Projektionen dieser beiden Bereiche auf die Rotationsachse zumindest bereichsweise überschneiden. Besonders bevorzugt ist es jedoch, wenn die Projektion des Verbindungsbereichs oder des Übertragungsbereichs auf die Rotationsachse die Projektion des jeweils anderen Bereichs auf die Rotationsachse umschließt. Hierdurch kann ein besonders geringer Bauraumbedarf des Bremsenrotors erreicht werden. Alternativ bevorzugt ist es, wenn die Projektionen der Verbindungsbereiche und der Übertragungsbereiche auf der Rotationsachse nebeneinander angeordnet sind oder voneinander beanstandet sind. Durch diese räumliche Anordnung der Verbindungsbereiche relativ zu den Übertragungsbereichen kann eine besonders effiziente thermische Entkopplung der beiden Bestandteile des Bremsenrotors erreicht werden.

Erfindungsgemäß ist das Adapterelement, insbesondere in axialer Richtung und/oder in Umfangsrichtung, mehrstückig ausgeführt. Die axiale Richtung ist derart ausgerichtet, dass diese parallel zur Rotationsachse zeigt. Unter einem mehrstückigen Adapterring ist zu verstehen, dass dieser nicht aus einem einzelnen Bauteil besteht, sondern aus mehreren Elementen aufgebaut ist und insbesondere nicht durch stoffschlüssiges Fügen einzelner Elemente ausgebildet ist. Durch die sich gegenseitig kontaktierenden Bereiche dieser mehreren Elemente, wird ein besonders hohes Maß an Dämpfung, insbesondere durch Mikroreibung, erreicht. Bevorzugt ist das Adapterelement in axialer Richtung aus mehreren Bauteilen oder Elementen, insbesondere sechs bis fünfzehn Elementen, ausgebildet. Die Mehrstückigkeit des Adapterelements in axialer Richtung ist besonders deshalb vorteilhaft, weil die meisten Schwingungsmoden des Bremsrotors, welche auch als Bremsenquietschen bekannt sind, bei einer axialen Mehrstückigkeit des Adapterelements eine besonders große Relativbewegung zwischen den einzelnen Elementen hervorrufen. Alternativ bevorzugt oder zusätzlich bevorzugt ist es, wenn das Adapterelement in Umfangsrichtung mehrstückig ausgebildet ist. Hierdurch kann eine besonders einfache Montage des Adapterelements realisiert werden. Besonders zweckmäßig kann es sein, dass zwischen den Elementen in Umfangsrichtung Zwischenräume gebildet sind, welche unter anderem als Kühlkanäle wirken können. Um ein hohes Dämpfungsmaß zu erreichen, kann das Adapterelement in Umfangsrichtung zwischen drei bis sechs Elemente aufweist. Wenn das Adapterelement sowohl in axialer Richtung als auch in Umfangsrichtung mehrstückig ausgebildet ist, kann es bevorzugt sein, dass in axialer Richtung mehrere Lagen gebildet werden, welche in Umfangsrichtung versetzt zueinander sind. Hierdurch wird erreicht, dass die einzelnen Lagen in axialer Richtung gegeneinander formschlüssig gesichert sind. Die einzelnen Elemente des Adapterelements können aus Blech, insbesondere Stahlblech, ausgebildet sein. In anderen Worten kann das Adapterelement aus paketierten Blech bestehen. Hierdurch kann eine besonders kostengünstige Konstruktion erreicht werden. Vorteilhafterweise liegt die Materialstärke der Blechelemente des Adapterelements dabei zwischen 1 und 4 mm. Besonders bevorzugt ist es, wenn die Materialstärke zwischen 1,5 und 3 mm liegt. Es hat sich gezeigt, dass bei einer solchen Blechstärke ein besonders guter Kompromiss zwischen Steifigkeit und Dämpfung des Adapterelements erzielt werden kann. Zum Erreichen einer besonders vorteilhaften Wärmeentkopplung ist es zweckmäßig, wenn alle oder zumindest einige Elemente des Adapterrings bereichsweise oder vollständig mit einer Keramik beschichtet werden. Um Kosten zu sparen, kann auch nur der Montage- und/oder der Übertragungsbereich mit einer Keramik beschichtet sein.

Bevorzugt ist ein Bestandteil des Adapterelements ein Polrad für einen ABS-Sensor. Durch diese integrale Ausgestaltung kann eine kostengünstige und bauraumsparende Bremsenkonfiguration erreicht werden. Der Bestandteil, welcher das Polrad bildet, dient nicht dazu, in irgendeiner Weise Kräfte oder Momente zu übertragen oder aufzunehmen. Bevorzugt ist auch der Bereich des Adapterelements, welcher das Polrad bildet, in Umfangsrichtung mehrstückig ausgebildet. Hierdurch wird eine besonders kostengünstige Variante eines Polrads ermöglicht. Zweckmäßig ist es dabei, wenn die verschiedenen Elemente, welche das Polrad bilden, aus unterschiedlichen Materialien bestehen. Hierdurch kann - aufgrund der durch die Wärme verursachten Verformung - auf die Temperatur des Bremsrotors rückgeschlossen werden. Unter anderem ist es somit möglich, die Rotationsgeschwindigkeit des Bremsenrotors indirekt zu messen und diese Information in einem ABS-System zusätzlich zu verarbeiten oder zu zuführen. Um eine, insbesondere in radialer Richtung, kompakte Bauweise zu erhalten, können sich die das Polrad bildenden Bereiche radial nach Innen erstrecken.

Vorteilhafterweise weist der Verbindungsbereich zumindest drei Verbindungsabschnitte auf, und wobei der Übertragungsbereich zumindest drei komplementäre Übertragungsabschnitte aufweist. Die Übertragungsabschnitte, welche ein Bestandteil des Adapterelements sind und die Verbindungsabschnitte, welche wiederum Bestandteil des Reibelements sind, können Ausnehmungen wie zum Beispiel Bohrungen, Langlöcher oder Nuten sein. Zweckmäßigerweise erstrecken sich die Langlöcher oder Nuten in ihrer Erstreckungsrichtung in eine radiale Richtung. Alternativ können die Verbindungsabschnitte und/oder die Übertragungsabschnitte auch durch ein separates Element ausgebildet sein, welches jedoch einstückig mit dem Reibelement respektive mit dem Übertragungsabschnitt ausgebildet ist. In anderen Worten können die Verbindungsabschnitte und/oder die Übertragungsabschnitte somit vorspringende Elemente wie zum Beispiel Zähne sein. Die Verbindungsabschnitte und/oder die Übertragungsabschnitte können bezüglich einer Ebene symmetrisch sein, um eine kostengünstige Fertigung zu erreichen. Zweckmäßigerweise erstrecken sich diese Symmetrieebenen radial von der Rotationsachse weg. Die Übertragungsabschnitte und/oder die Verbindungsabschnitte können sich sowohl in axialer Richtung - zum Erreichen besonders guter Schirmungseigenschaften des Bremsenrotors - und/oder in radialer Richtung - um einen geringen Bauraumbedarf sicherzustellen - erstrecken. Unter komplementär kann unter anderem verstanden werden, dass der Übertragungsabschnitt mittel- oder unmittelbar in einer direkten Wirkverbindung mit dem komplementären Verbindungsabschnitt formschlüssig in Eingriff steht. Mit anderen Worten kann dies bedeuten, dass die Übertragungsabschnitte entweder unmittelbar oder mittelbar - durch den Einsatz von Zwischenelementen - mit den komplementären Verbindungsabschnitten derart in Eingriff stehen, dass ein Drehmoment um die Rotationsachse übertragen werden kann. Der zu einem Verbindungsabschnitt komplementäre Übertragungsabschnitt kann insbesondere der zu einem Verbindungsabschnitt räumlich nächstliegende Übertragungsabschnitt sein. Zweckmäßigerweise umfassen die Übertragungsabschnitte und/oder die Verbindungsabschnitte für die Drehmomentübertragung eine, bevorzugt jedoch zumindest zwei, drei oder vier Kontaktflächen, wobei die Kontaktflächen dazu ausgelegt sind, mit einem anderen Bauteil in Kontakt zu treten, um ein Drehmoment um die Rotationsachse auf das andere Bauteil, insbesondere formschlüssig, zu übertragen.

Bevorzugt sind die Verbindungsabschnitte jeweils in eine radiale Richtung spielbehaftet zu den jeweiligen komplementären Übertragungsabschnitten. Unter spielbehaftet kann unter anderem verstanden werden, dass die Verbindungsabschnitte theoretisch für sich gesehen, insbesondere in radialer Richtung, relativ zum entsprechenden Übertragungsbereich verlagerbar sind. Durch diese Ausgestaltung wird erreicht, dass auch bei großen Temperaturschwankungen eine geringe Neigung zu Rissbildungen besteht. Die radiale Richtung ist zweckmäßigerweise die Richtung, welche sich radial von der axialen Richtung oder der Rotationsachse weg erstreckt. Insbesondere bilden somit die axiale Richtung, die Umfangsrichtung und die radiale Richtung ein Zylinderkoordinatensystem, dessen Ursprung auf der Rotationsachse des Bremsenrotors liegen kann.

Zweckmäßigerweise sind an den Verbindungsabschnitten und/oder den Übertragungsabschnitten Verstärkungselemente angeordnet. Hierdurch kann eine Reduktion der Flächenpressung an den Verbindungsabschnitten oder den Übertagungsabschnitten erreicht werden. Um Korrosion zu vermeiden, ist das Verstärkungselement bevorzugt aus einem edleren Material ausgebildet als das Reibelement respektive das Adapterelement. Besonders bevorzugt ist es, wenn das Verstärkungselement aus Edelstahl ausgebildet ist. Zweckmäßigerweise liegt das Verhältnis der Wandstärke des Verstärkungselements zu der Länge des Verstärkungselements in axialer Richtung in einem Bereich von 0,02 bis 0,3, sodass ein geringer Bauraumbedarf erreicht werden kann. Bevorzugt liegt das Verhältnis jedoch in einem Bereich von 0,03 bis 0,2 um ein besonders kostengünstiges Verstärkungselement aufgrund geringen Fertigungsaufwandes und guter Maßhaltigkeit herstellen zu können. Besonders bevorzugt liegt das Verhältnis in einem Bereich von 0,05 bis 0,17, da sich gezeigt hat, dass bei einem solchen Verhältnis nur eine geringe Neigung zu Rissbildung des Verstärkungselements besteht.

Bevorzugt erstrecken sich die Verbindungsabschnitte in axialer Richtung von einer axialen Stirnfläche des Reibelements aus und/oder wobei die Übertragungsabschnitte sich in axialer Richtung von einer axialen Stirnfläche des Adapterelements aus erstrecken. Durch diese axiale Ausrichtung der Verbindungsabschnitte und/oder der Übertragungsabschnitte kann eine besonders gute thermische Entkopplung des Reibelements zum Adapterelement erreicht werden. Unter axialer Stirnfläche sind insbesondere Flächen zu verstehen, dessen gemittelte Normale einen maximalen Winkel von 25°, jedoch bevorzugt von 5° zur axialen Richtung aufweisen. Von einer Fläche aus erstrecken bedeutet insbesondere, dass die Verbindungsabschnitte oder die Übertragungsabschnitte von dieser Fläche ausgebildet werden können, zum Beispiel durch Bohren, Schweißen oder Gießen. Mit anderen Worten kann dies bedeuteten, dass die Verbindungsabschnitte und/oder die Übertragungsabschnitte ein in axialer Richtung von der axialen Stirnfläche wegweisender Vorsprung, wie z. B. ein Zahn oder eine Ausnehmung, sein kann. Diese Ausnehmung kann ein bereichsweise rundes Loch, wie ein Langloch, welches sich vorteilhafterweise in radialer Richtung erstreckt, oder ein kreisrundes Loch sein. Zweckmäßigerweise bilden die Verbindungsabschnitte mit den Übertragungsabschnitten dabei eine Art axiale Verzahnung miteinander.

Vorteilhafterweise bildet zumindest ein Verbindungsabschnitt eine Kontur auf der axialen Stirnfläche des Reibelements, welche radial nach Innen offen ist, und/oder wobei zumindest ein Übertragungsabschnitt eine Kontur auf der axialen Stirnfläche des Adapterelements bildet, welche radial nach Außen offen ist. "offen" bedeutet dabei insbesondere, dass die Verbindungsabschnitte oder die Übertragungsabschnitte eine Kontur auf einer Fläche bilden, welche nicht in sich selbst geschlossen ist. In anderen Worten kann dies bedeuten, dass die Kontur sich bis zu einer Berandung der Fläche erstreckt und dort endet. Durch diese offenen Konturen kann erreicht werden, dass das Reibelement relativ zum Adapterelement in radialer Richtung verschiebbar ist, sodass Spannungen aufgrund der thermisch bedingten Ausdehnung der Bauteile des Bremsenrotors reduziert werden. Zweckmäßigerweise verjüngen sich die Konturen, sodass diese insbesondere eine U- oder V-Form bilden können. Die Flanken der Konturen auf der axialen Stirnfläche des Adapterelements können dabei einen ersten Winkel und/oder die Konturen auf der axialen Stirnfläche des Reibelements einen zweiten Winkel zueinander bilden, welche zwischen 90° und 10° liegen können. Hierdurch wird eine besonders einfache Herstellung der Übertragungsabschnitte und/oder der Verbindungsabschnitte möglich. Bevorzugt liegen der erste Winkel und/oder der zweite Winkel jedoch zwischen 60° und 20°, wodurch ein besonders geringer Bauraumbedarf der Verbindungsabschnitte und/oder der Übertragungsabschnitte realisiert werden kann. Besonders bevorzugt ist es, um eine hohe mechanische Festigkeit zu erreichen, wenn der erste Winkel und/oder der zweite Winkel zwischen 50° und 35° liegen. Der erste und der zweite Winkel sind dabei insbesondere die gemittelten Winkel von zwei gegenüberliegenden Flanken der Konturen. Beispielsweise bei einer V-Form der Kontur ist dies der Öffnungswinkel des V's. Zweckmäßig für eine leichte und kostengünstige Herstellung ist es, wenn der erste Winkel und der zweite Winkel im Wesentlichen gleich sind. Unter im Wesentlichen gleich ist dabei in diesem Kontext zu verstehen, dass die beiden Winkel maximal 5° Abweichung zueinander aufweisen.

Bevorzugt sind in oder an den Verbindungsabschnitten und/oder in oder an den Übertragungsabschnitten Zwischenelemente angeordnet, wobei die Zwischenelemente jeweils einen ersten Transmissionsabschnitt und einen zweiten Transmissionsabschnitt aufweisen, wobei der erste Transmissionsabschnitt dazu ausgelegt ist, ein Drehmoment um die Rotationsachse auf das Reibelement zu übertragen, und wobei der zweite Transmissionsabschnitt dazu ausgelegt ist, ein Drehmoment um die Rotationsachse auf das Adapterelement zu übertragen. Das Zwischenelement ist zweckmäßigerweise ein separates Bauteil in der Drehmomentübertragungskette, welches jedoch selbst einteilig oder mehrstückig ausgebildet sein kann. Durch den Einsatz des Zwischenelements wird eine besonders gute thermische Entkopplung des Adapterelements vom Reibelement realisiert. Unter "in oder an angeordnet" kann in diesem Zusammenhang unter anderem verstanden werden, dass die Verbindungsabschnitte und/oder Übertragungsabschnitte das Zwischenelement zumindest bereichsweise in einer Schnittebene umschließen, sodass eine sichere Drehmomentübertragung stattfinden kann. Diese Schnittebene ist insbesondere dadurch charakterisiert, dass sie eine Normale aufweisen kann, welche parallel zur axialen Richtung und somit zur Rotationsachse gerichtet ist. Bevorzugt erfolgt die Drehmomentübertragung auf den ersten Transmissionsabschnitt und/oder auf den zweiten Transmissionsabschnitt formschlüssig, sodass auch hohe dynamische Drehmomentschwankungen sicher übertragen werden können. Wenn die Verbindungsabschnitte und/oder die Übertragungsabschnitte Ausnehmungen sind, ist es vorteilhaft, wenn diese das Zwischenelement vollständig umschließen, sodass eine besonders sichere Drehmomentübertragung stattfinden kann. Für die Erfüllung der Aufgabe des Zwischenelements ist es zweckmäßig, wenn dieses steif ausgebildet ist. Hierdurch wird erreicht, dass die aufgrund von nicht verhinderbaren elastischen Verformungen des Zwischenelements auftretenden Relativbewegungen der Bestandteile des Bremsenrotors zueinander gering gehalten werden. Unter "steif" kann insbesondere verstanden werden, dass das Zwischenelement keine Kerben, Nuten, Einschnitte oder sonstige Schwächungen aufweist, welche dazu ausgelegt sind, die Verformung des Zwischenelements zu erleichtern. Besonders zweckmäßig ist es für eine "steife" Ausgestaltung des Zwischenelements, wenn das Material, aus dem das Zwischenelement zum überwiegenden Teil besteht, ein E-Modul aufweist, welches maximal 10% Abweichung zu dem E-Modul des Materials aufweist, aus welchem das Adapterelement und/oder das Reibelement besteht. Bevorzugt ist das Zwischenelement derart angeordnet, dass das Zwischenelement in axialer Richtung gegenüber dem Adapterelement und/oder dem Reibelement verschiebbar bzw. verlagerbar angeordnet ist. Hierdurch kann das Auftreten thermisch bedingter Spannung minimiert oder sogar komplett verhindert werden.

Bevorzugt ist das Zwischenelement derart orientiert, dass die Haupterstreckungsrichtung des Zwischenelements in die axiale Richtung zeigt. Die Haupterstreckungsrichtung ist insbesondere die Richtung, in welche die Länge des Zwischenelements bestimmt wird oder in welche sich mögliche Öffnungen, insbesondere Montageöffnungen, im Zwischenelement erstrecken. Durch diese Anordnung oder Ausrichtung des Zwischenelements wird eine leichte Montierbarkeit desselbigen erreicht. Alternativ bevorzugt kann das Zwischenelement derart angeordnet sein, dass die Haupterstreckungsrichtung des Zwischenelements in eine radiale Richtung weist. Vorteil dieser Ausführungsform ist es, dass ein besonders geringer Bauraumbedarf resultiert.

Zweckmäßigerweise korrespondiert der erste Transmissionsabschnitt des Zwischenelements im Wesentlichen mit der Form des Verbindungsabschnitts und/oder, wobei der zweite Transmissionsabschnitt des Zwischenelements mit der Form des Übertragungsabschnitts im Wesentlichen korrespondiert. Mit im Wesentlichen korrespondiert ist unter anderem gemeint, dass eine prinzipiell ähnliche geometrische Form vorliegt. Insbesondere sind dabei die für die formschlüssige Drehmomentübertragung ausgelegten kontaktierenden Flächen oder Kontaktflächen zumindest bereichsweise parallel zueinander. Durch diese im Wesentlichen korrespondierende Form - bereichsweise Parallelität - findet ein Kontakt statt, sodass nur eine geringe Neigung zu Pitting besteht. In einer Ausführungsform kann dies erreicht werden, indem das Zwischenelement wie ein Nutstein/Nutenstein im Verbindungsabschnitt und/oder im Übertragungsabschnitt formschlüssig geführt wird. Zweckmäßigerweise können der Verbindungsabschnitt und/oder der Übertragungsabschnitt dabei Langlöcher sein, welche sich insbesondere in radialer Richtung oder in Umfangsrichtung erstrecken.

Bevorzugt ist der erste Transmissionsabschnitt des Zwischenelements und/oder der zweite Transmissionsabschnitt des Zwischenelements oberflächengehärtet. Hierdurch wird ein besonders verschleißarmes Zwischenelement erreicht. Alternativ bevorzugt oder zusätzlich können auch die Verbindungsabschnitte und/oder die Übertragungsabschnitte gehärtet sein, sodass ein besonders standfester Bremsenrotor resultiert. Vorteilhafterweise weisen die gehärteten Flächen dabei eine Härte von 35 bis 65 auf, wodurch ein besonders verschleißarmer Bremsenrotor resultiert. Bevorzugt weisen die gehärteten Flächen jedoch eine Härte von 40 bis 55 HRC auf. Die Anmelderin hat herausgefunden, dass bei einer solchen Härte eine besonders geringe Neigung zur Rissbildung besteht, insbesondere bei besonders hohen Schwankungen des zu übertragenden Drehmoments.

Zweckmäßigerweise ist das Adapterelement, insbesondere reversibel, mit dem Reibelement durch Befestigungsmittel axial verspannt. Die Befestigungsmittel können zum Beispiel Schrauben, Bolzen oder Nieten sein. Reversibel bedeutet insbesondere, dass ein zerstörungsfreies Lösen der Befestigungsmittel möglich ist. Durch das Verspannen kann eine Vorspannung in axialer Richtung induziert werden, welche verhindert, dass das Adapterelement zumindest in die positive und/oder negative axiale Richtung verschoben werden kann. Zweckmäßigerweise sind die Befestigungsmittel dabei kreisförmig um die Rotationsachse angeordnet.Um eine besonders einfach montierbare Verbindung zu erreichen, erstrecken sich die Befestigungsmittel bevorzugt im Wesentlichen in axialer Richtung. Unter "im Wesentlichen" ist dabei in diesem Zusammenhang zu verstehen, dass die Befestigungsmittel einen Winkel von bis zu 5° zur axialen Richtung aufweisen dürfen. Alternativ bevorzugt können sich die Befestigungsmittel auch im Wesentlichen in radiale Richtung erstrecken, sodass ein geringer Bauraumbedarf in axialer Richtung resultiert. Zweckmäßigerweise sind die Befestigungsmittel nicht dazu ausgelegt, das Drehmoment - oder einen Teil davon - vom Reibelement auf das Adapterelement zu übertragen. Um dies zu erreichen können die Befestigungsmittel ein Spiel in Umfangsrichtung und/oder in radialer Richtung zu dem Adapterelement und/oder zum Reibelement aufweisen.

Vorteilhafterweise ist zwischen dem Befestigungsmittel und dem Adapterelement und/oder zwischen dem Befestigungsmittel und dem Reibelement ein elastisches Element angeordnet. Durch den Einsatz dieses elastischen Elements ist es möglich, insbesondere thermisch bedingte, Verformungen auszugleichen. Unter dem Begriff "zwischen" kann insbesondere verstanden werden, dass das elastische Element im Kraftfluss zwischen den Bauteilen angeordnet ist. Das elastische Element selbst kann dabei durch eine Feder, insbesondere eine Tellerfeder, gebildet sein. Alternativ oder zusätzlich kann ein elastisches Element zwischen dem Adapterelement und dem Reibelement angeordnet sein, wodurch die Zugänglichkeit des Ausweichraumes reduziert wird, sodass die Gefahr von Quetschungen verringert werden kann. Um eine einfache Montage zu erreichen, kann es zweckmäßig sein, wenn um die Befestigungsmittel herum elastische Elemente angeordnet sind. In anderen Worten kann dies bedeuten, dass die elastischen Elemente ähnlich wie Unterlegscheiben um die Befestigungsmittel herum angeordnet sind.

Bevorzugt umfasst der Bremsenrotor zumindest einen Spannring, wobei der Spannring zwischen dem Befestigungsmittel und dem Adapterring und/oder wobei der Spannring zwischen dem Befestigungsmittel und dem Reibelement angeordnet ist, wobei der Spannring zumindest bereichsweise rotationssymmetrisch zu der Rotationsachse ist. Durch den Einsatz des Spannrings kann eine besonders homogene und gleichförmige Verteilung der Flächenpressung ermöglicht werden. In anderen Worten kann der Spannring daher eine Art Unterlegscheibe bilden, wobei es zweckmäßigerweise der Fall ist, dass der Spannring hierzu die Rotationsachse umschließt. Zusätzlich oder alternativ kann der Spannring auch als Polrad für einen ABS-Sensor und/oder als ein Spannelement ausgebildet sein. Durch diese integrale Funktionserfüllung des Spannrings können Bauteile gespart werden, sodass eine kostengünstige Ausgestaltung des Bremsenrotors resultiert. Der Bremsenrotor kann auch zwei gleiche oder ungleiche Spannringe aufweisen, wobei die Spannringe vorteilhafterweise an zwei gegenüber liegenden Flächen angeordnet sind. In anderen Worten kann dies bedeuten, dass die Spannringe an zwei distal gegenüberliegenden Flächen angeordnet sind, sodass der eine Spannring eine axiale Verschiebung des Adapterelements relativ zum Reibelement in positive axiale Richtung und der andere Spannring in negative axiale Richtung verhindert.

Gemäß einem Aspekt umfasst ein Bremsenrotor, insbesondere einer der vorgenannten Bremsenrotoren, ein Polrad, wobei das Polrad aus zumindest zwei Elementen besteht, welche aus unterschiedlichen Materialen ausgebildet sind. Das Polrad dient dazu die Rotationsgeschwindigkeit, insbesondere um die Rotationsachse, zu bestimmen, wobei diese Information insbesondere für die Verarbeitung in einem ABS-System bestimmt ist. In anderen Worten kann es sich daher um ein Polrad für ein ABS-System handeln. Die Elemente eines möglicherweise vorhandenen ABS-Systems sind dann als ein Bestandteil des Bremsenrotors anzusehen, wenn diese durch den Bremsenrotor in Rotation, insbesondere um die Rotationsachse, versetzt werden können. Der Bremsenrotor kann ansonsten beispielsweise durch eine Bremsscheibe, eine Bremstrommel oder durch einen der vorhegend beschriebenen Bremsenrotoren gebildet sein. Die beiden Elemente oder Bauteile des Polrads, welche aus unterschiedlichen Materialien bestehen, sind bevorzugt Elemente des Polrads, welche nicht zur Festlegung des selbigen an anderen Elementen des Bremsenrotors dienen. Besonders bevorzugt handelt es sich bei den beiden Elementen um Messbauteile, welche dazu ausgelegt sind, ein Messsignal zur Bestimmung der Rotationsgeschwindigkeit zu generieren oder zumindest messbar zu machen. Unter unterschiedlichen Materialen sind in diesem Zusammenhang Materialien zu verstehen, welche unterschiedliche Wärmeausdehnungskoeffizienten besitzen. Durch die unterschiedlichen Wärmeausdehnungskoeffizienten wird eine relative wärmebedingte Lageveränderung von Bestandteilen der beiden Elemente zu einander erreicht, wobei durch diese Lagerveränderung eine indirekte Temperaturmessung des Bremsenrotors ermöglicht wird. Besonders bevorzugt liegt das Verhältnis des kleineren Wärmeausdehnungskoeffizienten zum größeren Wärmeausdehnungskoeffizienten in einem Bereich von 0,53 bis 0,95. Hierdurch wird eine besonders gute Detektion der Temperatur ermöglicht. Besonders bevorzugt liegt das Verhältnis jedoch in einem Bereich von 0,74 bis 0,92, denn es hat sich gezeigt, dass in diesem Bereich ein besonders guter Kompromiss zwischen - thermisch bedingter - Belastung und Messsignalschärfe erreicht wird.

In einer bevorzugten Ausführungsform weist das Polrad einen ersten Messring und ein Sekundärelement auf, wobei der erste Messring eine Vielzahl von Messöffnungen und das Sekundärelement eine Vielzahl von Messdurchbrüchen aufweisen, und wobei zumindest ein Messdurchbruch mit einer Messöffnung fluchtet. Bei dem Messring und dem Sekundärelement handelt es sich bevorzugt um die beiden Elemente des Polrads, welche aus unterschiedlichen Materialen ausgebildet sind. Der Messring kann als ein durchgängiger oder unterbrochener Ring ausgestaltet sein, welcher bezüglich einer Achse zumindest bereichsweise rotationssymmetrisch ausgebildet sein kann. Diese Achse ist insbesondere diejenige Achse, um welche der Bremsenrotor rotiert bzw. rotierbar gelagert ist. In anderen Worten handelt es sich bei der Achse daher um die Rotationsachse des Bremsenrotors. Das Sekundärelement kann ebenfalls als ein Ring oder alternativ als ein Ringsegment oder als ein gerades Element ausgestaltet sein. In dem Messring und dem Sekundärelement sind dabei eine Vielzahl von Messöffnungen bzw. von Messdurchbrüchen vorgesehen, welche dazu dienen, dass durch diese ein Messsignal entsteht, welches eine Bestimmung der Rotationsgeschwindigkeit des Polrads bzw. des Bremsenrotors ermöglicht. Dies kann beispielsweise durch Ausnutzung des Halleffekts oder durch Ultraschall erfolgen. Die Messöffnungen als auch die Messdurchbrüche können generell einen beliebigen Querschnitt aufweisen, bevorzugt ist der Querschnitt jedoch ein Parallelogramm, sodass ein Messignal entsteht, welches ein hohes Maß an Signalschärfe aufweist. Das Sekundärelement steht bevorzugt unmittelbar oder mittelbar mit dem Messring, insbesondere flächig, in Kontakt, wobei die wärmebedingte Lageänderung - von zumindest einigen Bereichen der beiden Elemente - relativ zueinander, insbesondere in Umfangsrichtung, möglichst nicht be- oder gar verhindert wird. Durch dieses flächige, insbesondere direkte, in Kontakt treten der beiden Elemente wird der Wärmeübergang erhöht, sodass die beiden Elemente eine möglichst gleiche Temperatur aufweisen. Flächig in Kontakt treten Flächen in diesem Zusammenhang insbesondere dann, wenn zwischen zwei mindesten 15 mm² großen parallelen Flächen, ein Spalt liegt, welcher kleiner als 0,75 mm ist. Besonders bevorzugt ist es, wenn das Sekundärelement an einer Fläche des Messrings angeordnet ist, welche eine Normale aufweist, die im Wesentlichen parallel zur Rotationsachse bzw. zur axialen Richtung orientiert ist. Hierdurch wird erreicht, dass das Polrad nur einen geringen Bauraumbedarf in Richtung der axialen Richtung aufweist. Unter einem Fluchten des Messdurchbruchs mit der Messöffnung ist in diesem Zusammenhang insbesondere zu verstehen, dass die Projektion des Querschnitts der Messöffnung und die Projektion des Querschnitts des Messdurchbruchs eine gemeinsame Schnittmenge oder Schnittfläche ausbilden, wobei die Normale der Projektionsebene im Wesentlichen parallel zur Rotationsachse orientiert sein kann. Durch das Fluchten und durch die thermisch bedingte relative Lageänderung ist die Schnittmenge/Schnittfläche eine Funktion der Temperatur, sodass durch die direkte oder indirekte Bestimmung dieser Fläche auf die Temperatur des Bremsenrotors rückgeschlossen werden kann. Bevorzugt fluchtet dabei zumindest ein Messdurchbruch mit einer Messöffnung. Besonders bevorzugt fluchten jedoch der überwiegende Teil oder alle Messdurchbrüche mit je einer Messöffnung. Unter im Wesentlichen parallel zur Rotationsachse sind auch winklige Anordnungen von +/- 5° zu verstehen.

Zweckmäßigerweise weist das Polrad eine Vielzahl von Sekundärelementen auf. Durch das Unterteilen des Sekundärelements in eine Vielzahl von Segmenten wird eine Entkopplung dieser Segmente zueinander erreicht, sodass die ausdehnungsbedingten mechanischen Belastungen reduziert werden. Besonders bevorzugt verfügt jedes dieser Sekundärelemente über eine Verbindungsstruktur, welche das jeweilige Sekundärelement mechanisch an den Messring koppelt. Besonders bevorzugt ist diese Verbindungsstruktur als ein Vorsprung oder als eine Öffnung, insbesondere in Richtung der axialen Richtung, ausgebildet, welcher in eine entsprechende Gegenstruktur des Messrings greift. Alternativ bevorzug kann die Verbindungsstruktur an der Gegenstruktur durch Montagemittel festgelegt werden. Zweckmäßigerweise ist die Verbindungsstruktur dabei zwischen einem Messdurchbruch und einem Ende des Sekundärringsegments, insbesondere in Umfangsrichtung, angeordnet. Hierdurch kann erreicht werden, dass in besonders einfacher Weise eine thermisch bedingte relative Lageänderung zwischen dem Messring und dem Sekundärelement ermöglicht wird. Die einzelnen Sekundärelemente (Segmente) können, müssen aber dabei nicht unbedingt, einen vollständigen Ring ergeben.

Weitere Vorteile und Merkmale der Erfindung ergeben sich aus der nachfolgenden Beschreibung von bevorzugten Ausführungsformen mit Bezug auf die beigefügten Figuren, wobei einzelne Merkmale von verschiedenen Ausführungsformen zu neuen Ausführungsformen kombiniert werden können. Es zeigen:
- Fig. 1: eine Schnittdarstellung einer Ausführungsform eines Bremsenrotors;
- Fig. 2: eine Detailansicht des Verbindungsbereichs und des Übertragungsbereichs einer weiteren Ausführungsform eines Bremsenrotors;
- Fig. 3: eine Detailansicht des Übertragungsbereichs und des Verbindungsbereichs einer weiteren Ausführungsform eines Bremsenrotors;
- Fig. 4: einen Schnitt von B zu B der Fig. 3;
- Fig. 5: einen Ausbruch eins Verbindungsbereichs eines Reibelements;
- Fig. 6: einen Ausbruch eines Übertragungsbereichs eines Adapterelements;
- Fig. 7: einen Ausschnitt einer Ausführungsform eines Reibelements;
- Fig. 8: einen Ausbruch einer Ausführungsform eines Adapterelements;
- Fig. 9: eine mehrteilige Ausführungsform eines Adapterelements;
- Fig. 10: eine weitere Ausführungsform eines mehrteiligen Bremsenrotors;
- Fig. 11: einen Ausbruch einer bevorzugten Ausführungsform eines Bremsenrotors;
- Fig. 12: eine Ausführungsform eines Zwischenelements;
- Fig. 13: zwei Schnittansichten verschiedener Ausführungsformen von Zwischenelementen;
- Fig. 14: eine Detailansicht eines Ausbruchs eines Reibelements;
- Fig. 15: eine weitere Ausführungsform eines Bremsenrotors;
- Fig. 16: eine Ausführungsform eines Polrads.

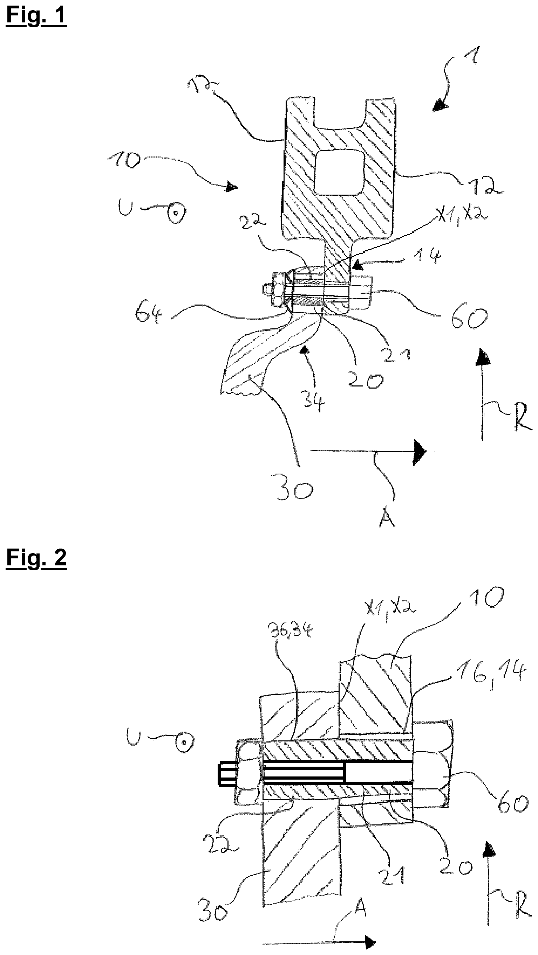

In der Fig. 1 ist ein Bremsenrotor 1 erkennbar, welcher ein Reibelement 10 und ein Adapterelement 30 aufweist. Der Bremsenrotor 1 ist dazu ausgelegt, um die Rotationsachse A zu rotieren. Die Rotationsachse A bildet mit der radialen Richtung R und der Umfangsrichtung U ein Zylinderkoordinatensystem, wobei die axiale Richtung A, die häufig als Höhenkoordinate im Zylinderkoordinatensystem bezeichnete Koordinate bildet, die Umfangsrichtung U die Winkelkoordinate und die radiale Richtung R die radiale Koordinate. Das Reibelement 10 ist in der dargestellten Ausführungsform ein innenbelüfteter Reibring, welcher zwei Reibflächen 12 aufweist und einen mittig zwischen den beiden Reibflächen 12 liegenden Verbindungsbereich 14, welcher sich radial nach Innen von den Reibflächen 12 aus erstreckt. An einer axialen Stirnfläche X1 des Reibelements 10 kontaktiert das Reibelement 10 eine axialen Stirnfläche X2 des Adapterelements 30. Das Reibelement 10 ist in der dargestellten Ausführungsform durch Befestigungsmittel 60 - in Form einer Schraube - mit dem Adapterelement 30 axial verspannt. Um thermisch bedingte Ausdehnungen ausgleichen zu können, ist zwischen den Befestigungsmitteln 60 und dem Adapterelement 30 ein elastisches Element 64 angeordnet. Um ein Drehmoment formschlüssig um die Rotationsachse A von dem Reibelement 10 auf das Adapterelement 30 zu übertragen, ist in der dargestellten Ausführungsform ein Zwischenelement 20 an dem Verbindungsbereich 14 des Reibelements 10 angeordnet, welches insbesondere mit dem Reibelement 10 verschweißt sein kann. Dieses Zwischenelement 20 ist dabei derart formschlüssig mit dem Übertragungsbereich 34 des Adapterelements 30 in Eingriff, dass ein Drehmoment um die Rotationsachse A formschlüssig übertagen werden kann. Um thermisch bedingte Relativbewegungen zwischen dem Reibelement 10 und dem Adapterelement 20 ausgleichen zu können, ist das Zwischenelement 20 in radialer Richtung R spielbehaftet (in radialer Richtung theoretisch verschiebbar) in dem Übertragungsbereich 34 des Adapterelements 30 geführt.

Die Fig. 2 zeigt einen Ausschnitt einer Ausführungsform eines Bremsenrotors 1, welcher der in der Fig. 1 dargestellten Ausführungsform sehr ähnlich ist. Hauptsächlich unterschiedlich ist dabei, dass das Verbindungselement 20 mit seinem zweiten Transmissionsabschnitt 22 im Übertragungsabschnitt 36 des Übertragungsbereichs 34 des Adapterelements 30 angeordnet ist. In der dargestellten Ausführungsform ist der zweite Transmissionsabschnitt 22 in das Adapterelement 30 eingepresst. Die dargestellte Ausführungsform weist ebenfalls Befestigungsmittel 60 auf, welche das Reibelement 10 mit dem Adapterelement 30 - in die axiale Richtung A - miteinander verspannen. Der erste Transmissionsabschnitt 21 des Zwischenelements 20 weist ein Spiel in radialer Richtung R zum Verbindungsabschnitt 16 im Verbindungsbereich 14 des Reibelements 10 auf, sodass der Verbindungsabschnitt 16 spielbehaftet zum Übertragungsabschnitt 36 ist. In Umfangsrichtung U hingegen kontaktiert der Verbindungsabschnitt 16 den ersten Transmissionsabschnitt 21 des Zwischenelements 20, um formschlüssig ein Drehmoment um die Rotationsachse A zu übertragen.

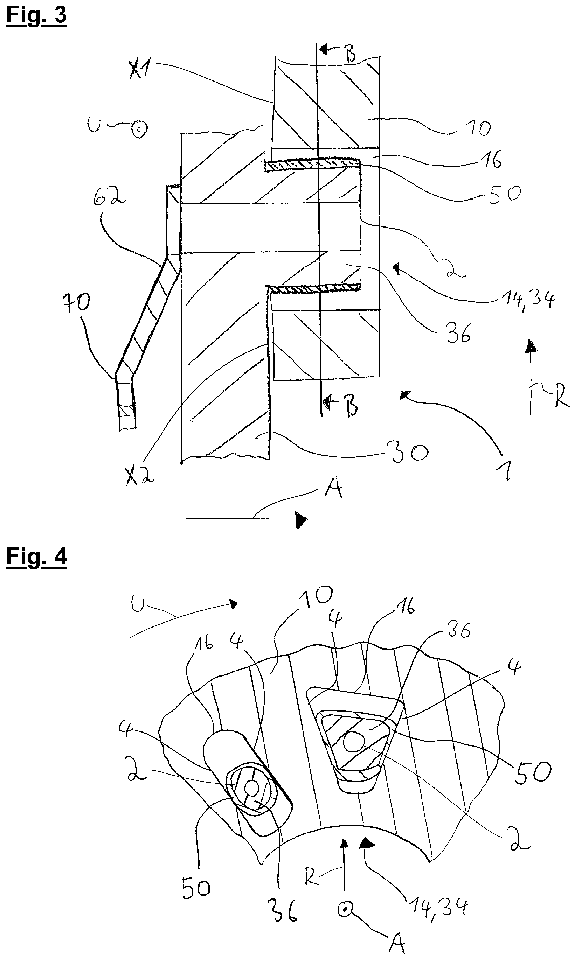

In der Fig. 3 ist eine weitere Ausführungsform eines Bremsenrotors 1 dargestellt. In dieser Ausführungsform ist am Adapterelement 30 ein Spannring 62 angeordnet, welcher einen Polradabschnitt 70 aufweist, sodass der Spannring 62 als ein Polrad für einen ABS-Sensor fungiert. Zusätzlich dient der Spannring 62 in der dargestellten Ausführungsform auch dazu, mit nicht dargestellten Befestigungsmitteln 60 eine Art Unterlegscheibe zu bilden. Für die formschlüssige Drehmomentübertragung weist das Adapterelement 30 im Übertragungsbereich 34 einen Übertragungsabschnitt 36 auf, welcher in der dargestellten Ausführungsform als ein separates vorspringendes Element ausgebildet ist. Dieses separate Element ist jedoch einstückig mit dem Adapterelement 30 ausgeführt. Der Übertragungsabschnitt 36 weist eine sich in axialer Richtung A ersteckende Öffnung 2 auf, welche das Adapterelement 30 vollständig durchdringt und dazu ausgelegt ist, nicht dargestellte Befestigungsmittel 60 aufzunehmen. Zusätzlich ist am Übertragungsabschnitt 36 ein Verstärkungselement 50 angeordnet, welches dazu dient, eine möglichst homogene Flächenpressung zu erreichen. Der in der Fig. 3 dargestellte Schnitt durch den Verbindungsbereich 14 weist einen Verbindungsabschnitt 16 auf, welcher in radialer Richtung R spielbehaftet zum Verstärkungselement 50 und zum Übertragungsabschnitt 36 ist. In Umfangsrichtung U jedoch kontaktiert der Verbindungsabschnitt 16 das Verstärkungselement 50, um formschlüssig ein Drehmoment um die Rotationsachse A zu übertragen.

In der Fig. 4 ist der Schnitt von B nach B aus der Fig. 3 dargestellt. In der Fig. 4 sind zwei alternative Gestaltungen des Verbindungsbereichs 14 des Reibelements 10 und des Übertragungsabschnitts 36 zu erkennen. In der linken Ausgestaltung wird der Verbindungsabschnitt 16 durch ein Langloch gebildet, welches sich in radialer Richtung R nach Außen von der Rotationsachse A weg erstreckt. Die Kontaktflächen 4 des Verbindungsabschnitts 16 erstrecken sich dabei parallel zueinander. Der Übertragungsabschnitt 36, welcher in der dargestellten Schnittebene vollständig von einem Verstärkungselement 50 umschlossen wird, sitzt wie ein Nutstein in dem Verbindungsabschnitt 16 des Reibelements 10. In der rechts dargestellten alternativen Ausgestaltung des Verbindungsabschnitts 16, sind die beiden Kontaktflächen 4 des Verbindungsabschnitts 16 winkelig zueinander ausgebildet, sodass diese beiden Kontaktflächen 4 V-förmig zueinander stehen. Die Winkelhalbierende dieses Winkels weist in die radiale Richtung R. Der komplementäre Übertragungsabschnitt 36 des Übertragungsbereichs 34 weist in der dargestellten Ausführungsform eine im Wesentlichen korrespondierende Form - unter Zuhilfenahme des Verstärkungselements 50 - zum Verbindungsabschnitt 16 auf. Auch bei dieser Ausgestaltung des Übertragungsabschnitts 36 umschließt das Verstärkungselement 50 den Übertragungsabschnitt 36 in der dargestellten Schnittebene vollständig. Alternativ bevorzugt können die Übertragungsabschnitt 36 auch durch Zwischenelemente 20 gebildet sein, sodass der in der Fig. 4 dargestellte Schnitt auch zu den Ausführungsformen der Fig. 2 oder der Fig. 1 passen könnte.

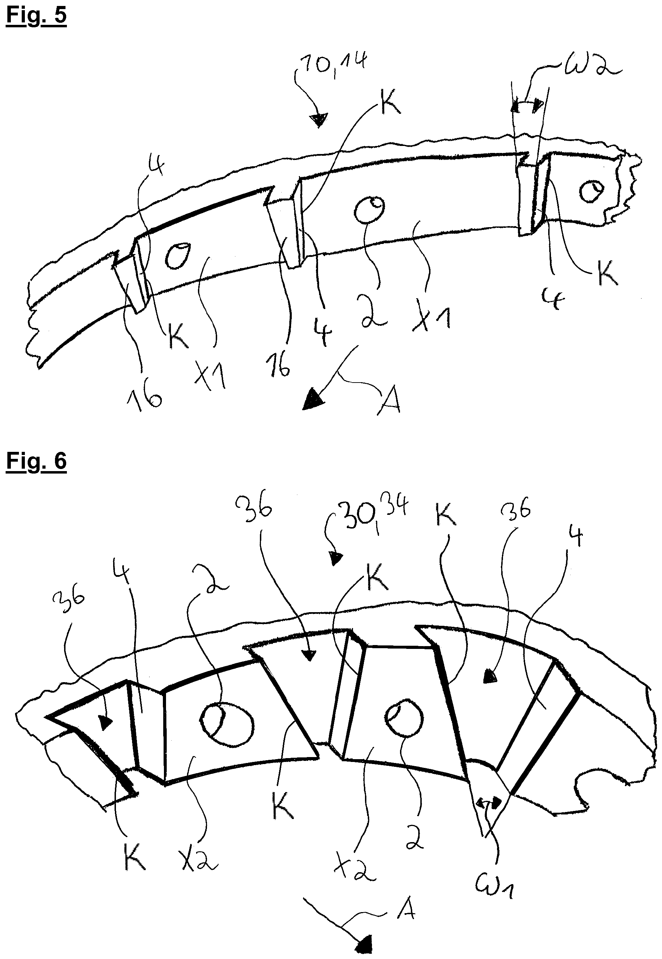

Der in der Fig. 5 dargestellte Ausbruch eines Reibelements 10, zeigt vornehmlich den Verbindungsbereich 14 des Reibelements 10. In der dargestellten Ausführungsform sind die Verbindungsabschnitte 16 durch in axiale Richtung A von der axialen Schnittfläche des Reibelements X1 wegweisende Vorsprünge gebildet. Die durch die Vorsprünge gebildeten Verbindungsabschnitte 16, erzeugen dabei Konturen K auf der axialen Stirnfläche X1 des Reibelements 10, welche sowohl radial nach Innen als auch nach Außen offen sind. Die Flanken der Kontur K bilden einen zweiten Winkel W2 zueinander. Die Verbindungsabschnitte 16 weisen jeweils zwei Kontaktflächen 4 auf, wobei durch die perspektivische Ansicht in der Fig. 5 nur jeweils eine der Kontaktflächen 4 des Verbindungsabschnitts 16 erkennbar ist.

In der Fig. 6 ist ein Ausbruch des Übertragungsbereichs 34 des Adapterelements 30 dargestellt. In der dargestellten Ausführungsform werden die Übertragungsabschnitte 36 durch Ausnehmungen gebildet, welche sich in axialer Richtung A von der axialen Stirnfläche X2 des Adapterelements 30 aus erstrecken. Durch diese Ausnehmung wird unter anderem die Kontur K auf der axialen Stirnfläche X2 des Adapterelements 30 gebildet, welche nach Innen und nach Außen offen ist. Für eine formschlüssige Drehmomentübertragung weisen die Übertragungsabschnitte 36 jeweils zwei Kontaktflächen 4 auf. Zur axialen Verspannung des Adapterelements 30 verfügt die axiale Stirnfläche des Adapterelements X2 über Öffnungen 2, die dazu ausgelegt sind, nicht dargestellte Befestigungsmittel 60 aufzunehmen.

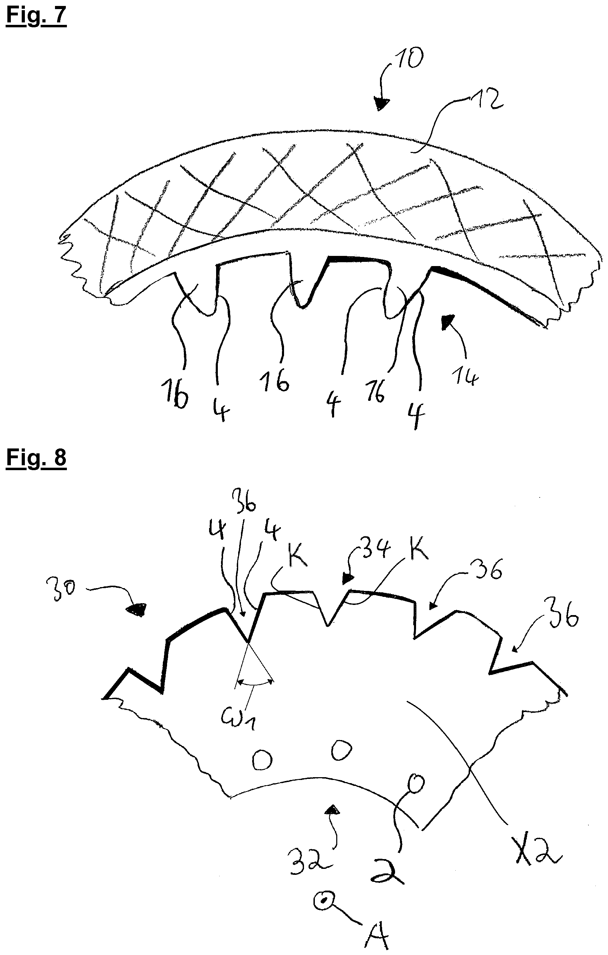

In der Fig. 7 ist eine Ausführungsform eines Reibelements 10 dargestellt, welches unter anderem eine Reibfläche 12 aufweist und einen sich radial nach Innen erstreckenden Verbindungsbereich 14. Der Verbindungsbereich 14 umfasst Verbindungsabschnitte 16 in Form von radial nach Innen weisenden Zähnen. Diese Verbindungsabschnitte 16 verfügen jeweils über zwei Kontaktflächen 4 für die Drehmomentübertragung.

In der Fig. 8 ist ein Ausbruch einer Ausführungsform eines Adapterelements 30 erkennbar. Das Adapterelement 30 weist einen radial nach Innen weisenden Montagebereich 32 auf, welcher über Öffnungen 2 zur Festlegung an einer Nabe verfügt. An dem radial gegenüber liegenden Ende des Adapterelements 30 befindet sich der Übertragungsbereich 34. Dieser Übertragungsbereich 34 weist eine Vielzahl von Übertragungsabschnitten 36 - in Form von V-förmigen Ausnehmungen - auf. Die durch die Ausnehmungen gebildeten Kontaktflächen 4, welche sich in axialer Richtung A von einem distalen Ende zum anderen distalen Ende des Übertragungsbereichs 34 erstrecken, bilden in der dargestellten Ausführungsform auf der axialen Stirnfläche des Adapterelements X2 nach Außen offene Konturen K. Die Flanken der Kontur K weisen dabei einen ersten Winkel W1 zueinander auf.

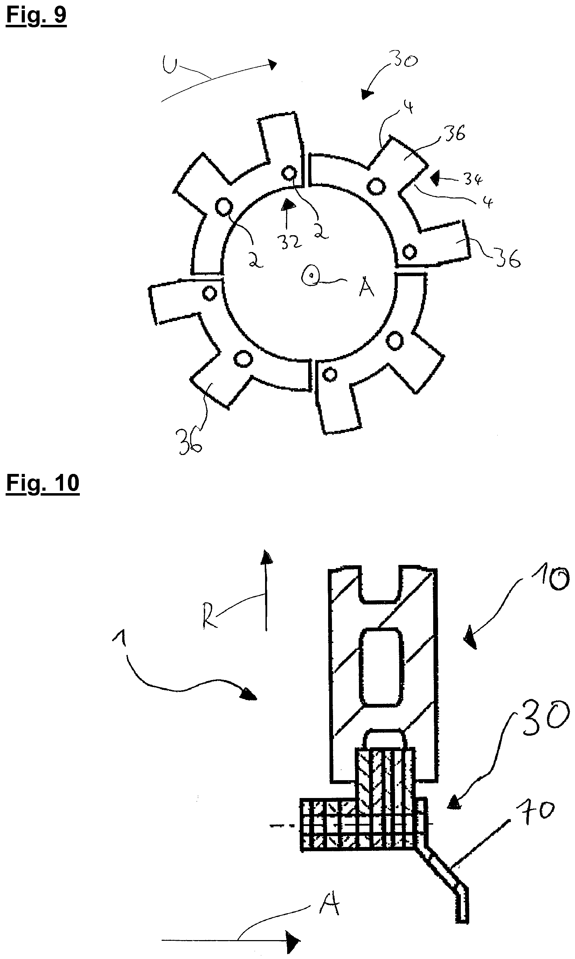

In der Fig. 9 ist eine mehrteilige Ausführungsform eines Adapterelements 30 dargestellt. In dieser Ausführungsform umfasst das Adapterelement 30 in Umfangsrichtung U vier Elemente. Jedes einzelne dieser Elemente weist einen Teil des Montagebereichs 32 auf, wobei diese Bestandteile des Montagebereichs 32 jeweils zwei Öffnungen 2 umfassen. Zusätzlich weisen die Elemente jeweils zwei Übertragungsabschnitte 36 auf, welche sich radial nach Außen erstrecken und eine Art radial nach außenweisende Verzahnung bilden. Die Übertragungsabschnitte 36 des Übertragungsbereichs 34 besitzen je zwei Kontaktflächen 4, welche parallel zueinander orientiert sind.

In der Fig. 10 ist eine weitere Ausführungsform eines Bremsenrotors 1 dargestellt, bei welcher das Reibelement 10 durch einen innenbelüfteten Reibring gebildet ist. Das Adapterelement 30 ist durch mehrere Elemente - in die axiale Richtung A - aufgebaut. Das Polrad 70 - für einen ABS Sensor - wird ebenfalls durch eine Lage des Adapterelements 30 gebildet. Jede einzelne dieser Lagen in axialer Richtung A kann derartig versetzt in Umfangsrichtung zueinander sein, dass diese einzelnen Lagen in axialer Richtung A formschlüssig zueinander gesichert sind. In anderen Worten können die einzelnen Lagen in axialer Richtung A wie ein versetzter Steineverbund in einer Mauer zueinander angeordnet sein.

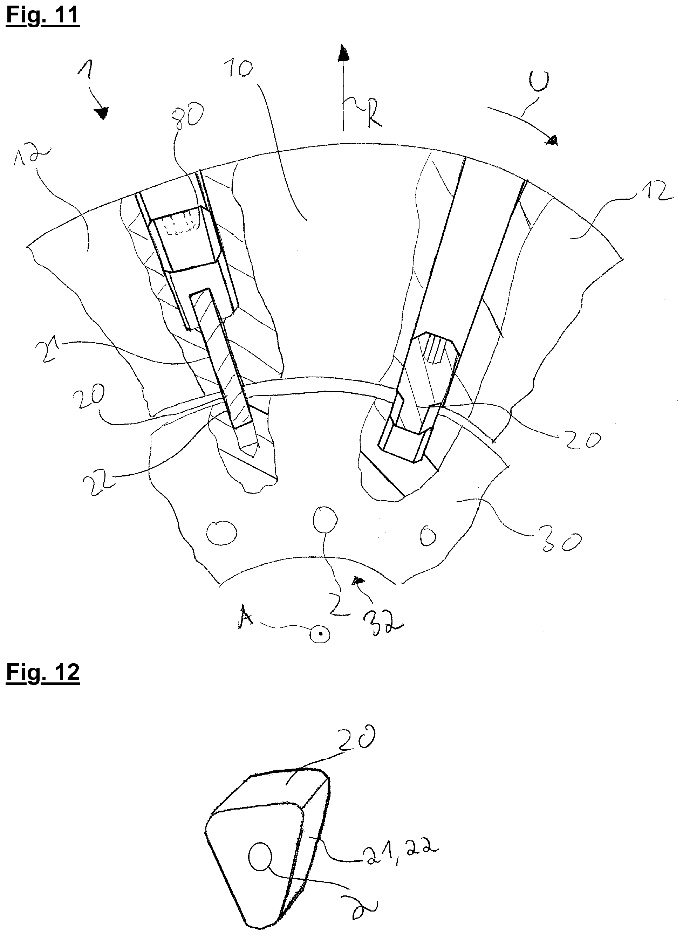

In der Fig. 11 ist ein Ausbruch eines Bremsenrotors 1 dargestellt, bei welchem sich die Zwischenelemente 20 in radialer Richtung R erstrecken. Die Zwischenelemente 20 werden dabei radial von außen in das Reibelement 10 eingeführt, wobei das Reibelement 10 eine erste Reibfläche 12 und eine nicht dargestellte gegenüberliegende zweite Reibfläche 12 aufweist. Dargestellt sind in der Fig. 11 zwei unterschiedliche Ausführungsformen für die Anordnung von Zwischenelementen 20, welche jedoch in einem Bremsenrotor 1 mit einander kombiniert werden können. Bei der linken Ausführungsform ist das Zwischenelement 20 durch eine bolzenartige Struktur charakterisiert, wobei der erste Transmissionsabschnitt 21 des Zwischenelements 20 mit dem Reibelement 10 derartig formschlüssig in Kontakt tritt, dass ein Drehmoment um die axiale Richtung A auf das Adapterelement 30 durch das Zwischenelement 20 übertragen werden kann. Hierzu weist das Zwischenelement 20 einen zweiten Transmissionsabschnitt 22 auf, welcher formschlüssig in das Adapterelement 30 greift. Um ein Austreten des Zwischenelements 20 zu verhindern, ist im Reibelement 10 ein Sicherungselement 80 angeordnet, welches selbst wiederum durch ein selbsthemmendes Gewinde gesichert ist. In der rechten Ausführungsform in Fig. 11 ist das Zwischenelement 20 durch einen Gewinde aufweisenden Bolzen gebildet, welcher in ein Gewinde im Adapterelement 30 eingeschraubt ist. Dieses Zwischenelement 20 steht dabei derart formschlüssig in Kontakt mit dem Reibelement 10, dass ein Drehmoment um die Rotationsachse A übertragen werden kann. Für die Montage an einer Nabe (nicht dargestellt) weist der Montagebereich 32 des Adapterelements 30 Öffnungen 2 auf.

Fig. 12 zeigt ein Zwischenelement 20, welches zur Montage eine Öffnung 2 aufweist und einen ersten Transmissionsabschnitt 21 und einen zweiten Transmissionsabschnitt 22 umfasst. Der erste Transmissionsabschnitt 21 und der zweiten Transmissionsabschnitt 22 weisen dabei Flächen auf, welche dazu dienen können, derart formschlüssig in Eingriff mit einem nichtdargestellten Verbindungsabschnitt 16 und dessen Kontaktflächen 4 und/oder einem Übertragungsabschnitt 36 und dessen Kontaktflächen 4 zu gelangen, dass ein Drehmoment übertragen werden kann.

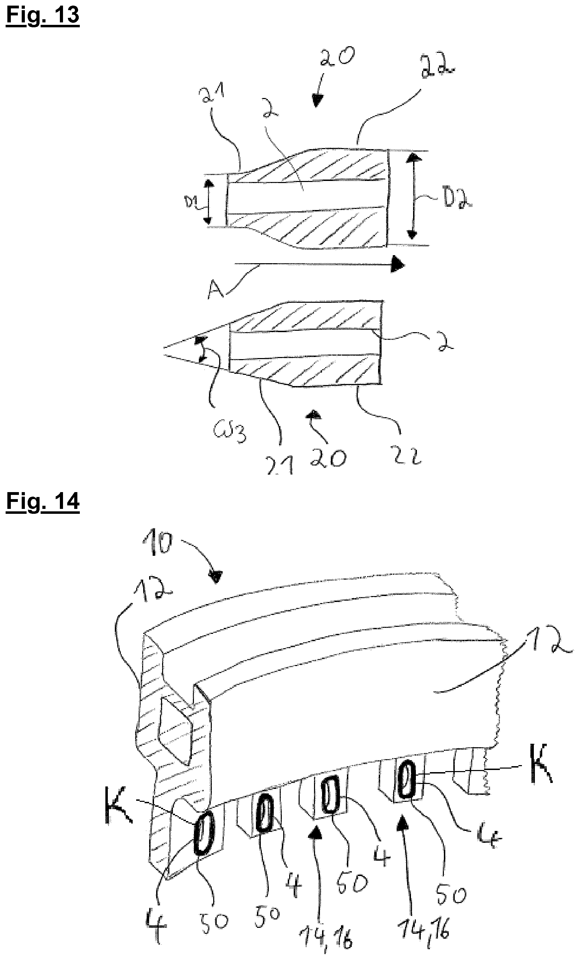

In der Fig. 13 sind zwei verschiedene Ausführungsformen von Zwischenelementen 20 dargestellt. Beide Zwischenelemente 20 weisen einen ersten Transmissionsabschnitt 21 und einen zweiten Transmissionsabschnitt 22 auf. Der erste Transmissionsabschnitt 21 der oberen Ausführungsform verfügt dabei über einen ersten mittleren Kontaktabstand D1, welcher kleiner ist als der zweite mittlere Kontaktabstand D2. Die mittleren Kontaktabstände (D1, D2) sind die gemittelten Abstände von gegenüberliegenden Flächen des ersten bzw. des zweiten Transmissionsabschnitts (21, 22), wobei diese Flächen dazu ausgelegt sein können, formschlüssig mit dem Reibelement 10 und/oder dem Adapterelement 30 in Eingriff gebracht zu werden. Die untere Ausführungsform des Zwischenelements 20 weicht dabei von der oberen Ausführungsform in derart ab, dass die Kontaktflächen des ersten Transmissionsabschnitts 21 einen dritten Winkel zueinander bilden, sodass das Zwischenelement 20 zentrierend in einem Verbindungsabschnitt 16 angebracht werden kann. Zusätzlich weisen beide dargestellten Ausführungsformen von Zwischenelementen 20 Öffnungen 2 zur Montage auf.

In der Fig. 14 ist ein Teilsegment eines Reibelements 10 dargestellt, wobei dieses Reibelement 10 zwei genüberliegende Reibflächen 12 aufweist und mehrere radial nach Innen weisende Verbindungsbereiche 14. Die Verbindungsbereiche 14 umfassen jeweils einen Verbindungsabschnitt 16. Diese Verbindungsabschnitte 16 sind dabei Langlöcher, welche eine Kontur Kauf den Verbindungsbereichen 14 bilden. In den Verbindungsabschnitten 16 ist jeweils ein Verstärkungselement 50 angeordnet, welches insbesondere aus Edelstahl besteht. Die Kontaktflächen 4 des Verbindungsabschnitts 16 bzw. des Verstärkungselements 50 dienen dazu, derart formschlüssig in Eingriff mit einem nichtdargestellten Adapterelement 30 zu gelangen, dass ein Drehmoment übertragen werden kann. Die die Verbindungsabschnitte 16 bildenden Langlöcher erstrecken sich radial nach Außen. Diese Ausführungsform ist deshalb vorteilhaft, da hier Zwischenelemente 20 bzw. Übertragungsabschnitte 36 in einer besonders einfachen und kostengünstigen Weise wie ein Nutstein/Nutenstein in die Verbindungsabschnitte 16 greifen können.

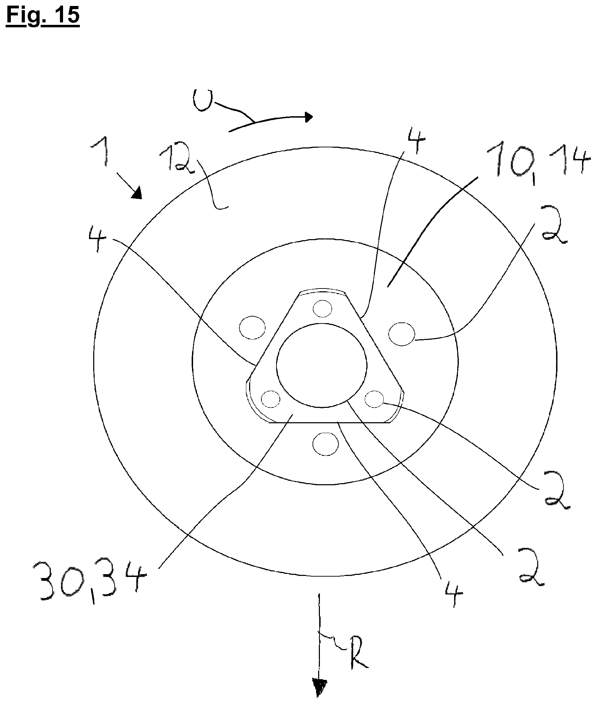

In der Fig. 15 ist eine weitere Ausführungsform eines Bremsenrotors 1 dargestellt, wobei der Bremsenrotor 1 ein Reibelement 10 und ein Adapterelement 30 umfasst. Das Reibelement 10 weist dabei zwei gegenüberliegende Reibflächen 12 auf (nur eine in der Fig.15 erkennbar), welche sich radial nach Außen erstrecken. Radial nach Innen weist das Reibelement 10 im Verbindungsbereich 14 drei Kontaktflächen 4 auf, welche eine Art Polygonverbindung mit im Wesentlichen korrespondierenden Kontaktflächen 4 des Adapterelements 30 bilden. Um an einer Nabe festgelegt werden zu können, weist das Adapterelement 30 Öffnungen 2 auf. Die Öffnungen 2 des Reibelements 10 hingegen dienen insbesondere dazu, mittels nicht dargestellten Spannringen 62 eine axiale Verlagerung des Reibelements 10 relativ zum Adapterelement 30 zu verhindern.

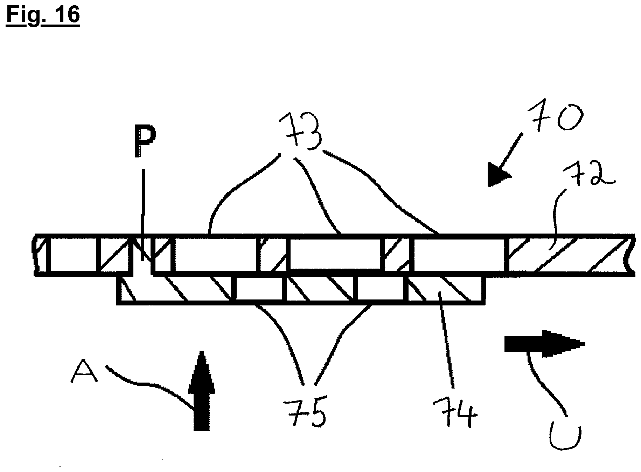

In der Fig. 16 ist ein Ausbruch aus einen Schnitt einer Ausführungsform eines erfindungsgemäßen Polrads 70 des Bremsenrotors 1 gezeigt. Das Polrad 70 umfasst einen Messring 72 als auch eine Vielzahl von Sekundärelementen 74, wobei in der Fig. 16 lediglich eines dieser Sekundärelemente 74 erkennbar ist. Jedes dieser Sekundärelemente 74 verfügt an einem Ende in Umfangsrichtung U über eine Verbindungsstruktur P, welche zur Festlegung des Sekundärelements 74 an dem Messring 72 dient. Der Messring 72 verfügt über eine Vielzahl von Messöffnungen 73, welche sich in Richtung der axialen Richtung A bzw. der Rotationsachse A erstrecken und wobei die Messdurchbrüchen 75 des Sekundärelements 74 mit den Messöffnungen 73 fluchten.

### Bezugszeichenliste:

- 1: - Bremsenrotor
- 2: - Öffnung
- 4: - Kontaktfläche
- 10: - Reibelement
- 12: - Reibfläche
- 14: - Verbindungsbereich
- 16: - Verbindungsabschnitt
- 20: - Zwischenelement
- 21: - erster Transmissionsabschnitt
- 22: - zweiter Transmissionsabschnitt
- 30: - Adapterelement
- 32: - Montagebereich
- 34: - Übertragungsbereich
- 36: - Übertragungsabschnitt
- 50: - Verstärkungselement
- 60: - Befestigungsmittel
- 62: - Spannring
- 64: - elastisches Element
- 70: - Polrad
- 72: - Messring
- 73: - Messöffnung
- 74: - Sekundärelement
- 75: - Messdurchbruch
- 80: - Sicherungselement
- A: - axiale Richtung / Rotationsachse
- B: - Schnittebene
- D1: - erster mittlerer Kontaktabstand
- D2: - zweiter mittlerer Kontaktabstand
- K: - Kontur
- P: - Verbindungsstruktur
- R: - radiale Richtung
- U: - Umfangsrichtung
- W1: - erster Winkel
- W2: - zweiter Winkel
- W3: - dritter Winkel
- X1: - axiale Stirnfläche des Reibelements
- X2: - axiale Stirnfläche des Adapterelements

## Patentansprüche

1. Bremsenrotor (1), insbesondere für Nutzfahrzeuge, umfassend zumindest ein Reibelement (10) und ein Adapterelement (30),
wobei der Bremsenrotor (1) dazu ausgelegt ist, um eine Rotationsachse (A) zu rotieren,
wobei das Reibelement (10) zumindest eine Reibfläche (12) und einen Verbindungsbereich (14) aufweist,
wobei das Adapterelement (30) einen Montagebereich (32) und einen Übertragungsbereich (34) aufweist,
wobei der Montagebereich (32) dazu ausgelegt ist, den Bremsenrotor (1) an einer Nabe festzulegen,
wobei der Verbindungsbereich (14) mittelbar oder unmittelbar derart formschlüssig in einer Umfangsrichtung (U) mit dem Übertragungsbereich (34) in Eingriff steht, dass zwischen dem Verbindungsbereich (14) und dem Übertragungsbereich (34) ein Drehmoment um die Rotationsachse (A) von dem Reibelement (10) auf das Adapterelement (30) übertragbar ist,
**dadurch gekennzeichnet, dass** das Adapterelement (30) mehrstückig, insbesondere in axiale Richtung (A) und/oder in Umfangsrichtung (U), ausgeführt ist.

2. Bremsenrotor (1) gemäß einem der vorhergehenden Ansprüche,
wobei der Verbindungsbereich (14) zumindest drei Verbindungsabschnitte (16) aufweist, und
wobei der Übertragungsbereich (34) zumindest drei komplementäre Übertragungsabschnitte (36) aufweist.

3. Bremsenrotor (1) gemäß Anspruch 2,
wobei die Verbindungsabschnitte (16) jeweils in eine radiale Richtung (R) spielbehaftet zu den jeweilig komplementären Übertragungsabschnitten (36) sind.

4. Bremsenrotor (1) gemäß einem der Ansprüche 2 bis 3,
wobei sich die Verbindungsabschnitte (16) in axialer Richtung (A) von einer axialen Stirnfläche des Reibelements (X1, 10) aus erstrecken, und/oder wobei die Übertragungsabschnitte (36) sich in axialer Richtung (A) von einer axialen Stirnfläche des Adapterelements (X2, 30) aus erstrecken.

5. Bremsenrotor (1) gemäß Anspruch 3 oder 4,
wobei an den Verbindungsabschnitten (16) und/oder den Übertragungsabschnitten (36) Verstärkungselemente (50) angeordnet sind.

6. Bremsenrotor (1) gemäß einem der Ansprüche 2 bis 5,
wobei zumindest ein Verbindungsabschnitt (16) eine Kontur (K) auf der axialen Stirnfläche des Reibelements (X1, 10) bildet, welche radial nach innen offen ist, und/oder
wobei zumindest ein Übertragungsabschnitt (36) eine Kontur (K) auf der axialen Stirnfläche des Adapterelements (X2, 30) bildet, welche radial nach außen offen ist.

7. Bremsenrotor (1) gemäß einem der Ansprüche 2 bis 6,
wobei in/an den Verbindungsabschnitten (16) und/oder in/an den Übertragungsabschnitten (36) Zwischenelemente (20) angeordnet sind,
wobei die Zwischenelemente (20) jeweils einen ersten Transmissionsabschnitt (21) und einen zweiten Transmissionsabschnitt (22) aufweisen,
wobei der erste Transmissionsabschnitt (21) dazu ausgelegt ist, ein Drehmoment um die Rotationsachse (A) auf das Reibelement (10) zu übertragen, und
wobei der zweite Transmissionsabschnitt (22) dazu ausgelegt ist, ein Drehmoment um die Rotationsachse (A) auf das Adapterelement (30) zu übertragen.

8. Bremsenrotor (1) gemäß Anspruch 7,
wobei das Zwischenelement (20) derart orientiert ist, dass die Haupterstreckungsrichtung des Zwischenelements (20) in die axiale Richtung (A) zeigt.

9. Bremsenrotor (1) gemäß Anspruch 7 oder 8,
wobei der erste Transmissionsabschnitt (21) des Zwischenelements (20) im Wesentlichen mit der Form des Verbindungsabschnitte (16) korrespondiert und / oder,
wobei der zweite Transmissionsabschnitt (22) des Zwischenelements (20) im Wesentlichen mit der Form des Übertragungsabschnitts (36) korrespondiert.

10. Bremsenrotor (1) gemäß einem der Ansprüche 8 bis 9,
wobei der erste Transmissionsabschnitt (21) des Zwischenelements (20) und/oder der zweite Transmissionsabschnitt (22) des Zwischenelements (20) oberflächengehärtet ist/sind.

11. Bremsenrotor (1) gemäß einem der vorgehenden Ansprüche,
wobei das Adapterelement (30), insbesondere reversibel, mit dem Reibelement (10) durch Befestigungsmittel (60) axial verspannt ist.

12. Bremsenrotor (1) gemäß Anspruch 11,
umfassend zumindest einen Spannring (62),
wobei der Spannring (62) zwischen dem Befestigungsmittel (60) und dem Adapterring (30) und/oder
wobei der Spannring (62) zwischen dem Befestigungsmittel (60) und dem Reibelement (10) angeordnet ist,
wobei der Spannring (62) zumindest bereichsweise rotationssymmetrisch zu der Rotationsachse (A) ist.

13. Bremsenrotor (1) gemäß einem der vorhergehenden Ansprüche, umfassend ein Polrad (70), wobei das Polrad (70) aus zumindest zwei Elementen besteht, welche aus unterschiedlichen Materialen ausgebildet sind.

14. Bremsenrotor (1) gemäß Anspruch 13,
wobei das Verhältnis des kleineren Wärmeausdehnungskoeffizienten zum größeren Wärmeausdehnungskoeffizienten der unterschiedlichen Materialien in einem Bereich von 0,53 bis 0,95 liegt.

## Claims

1. A brake rotor (1), in particular for utility vehicles, comprising at least one friction element (10) and one adapter element (30),
wherein the brake rotor (1) is designed to rotate about an axis of rotation (A), wherein the friction element (10) has at least one friction surface (12) and one connection region (14),
wherein the adapter element (30) has an installation region (32) and a transfer region (34),
wherein the installation region (32) is designed for fixing the brake rotor (1) to a hub,
wherein the connection region (14) indirectly or directly engages in positively locking fashion in a circumferential direction (U) with the transfer region (34) such that a torque about the axis of rotation (A) can be transferred between the connection region (14) and the transfer region (34) from the friction element (10) to the adapter element (30),
**characterized in that** the adapter element (30) is of multi-part form, in particular in the axial direction (A) and/or in the circumferential direction (U).

2. The brake rotor (1) as claimed in any of the preceding claims,
wherein the connection region (14) has at least three connection portions (16), and
wherein the transfer region (34) has at least three complementary transfer portions (36).

3. The brake rotor (1) as claimed in claim 2,
wherein the connection portions (16) each exhibit play in a radial direction (R) in relation to the respectively complementary transfer portions (36).

4. The brake rotor (1) as claimed in either of claims 2 and 3,
wherein the connection portions (16) extend in the axial direction (A) proceeding from an axial face surface of the friction element (X1, 10), and/or
wherein the transfer portions (36) extend in the axial direction (A) proceeding from an axial face surface of the adapter element (X2, 30).

5. The brake rotor (1) as claimed in claim 3 or 4,
wherein reinforcement elements (50) are arranged on the connection portions (16) and/or the transfer portions (36).

6. The brake rotor (1) as claimed in any of claims 2 to 5,
wherein at least one connection portion (16) forms a radially inwardly open contour (K) on the axial face surface of the friction element (X1, 10), and/or
wherein at least one transfer portion (36) forms a radially outwardly open contour (K) on the axial face surface of the adapter element (X2, 30).

7. The brake rotor (1) as claimed in any of claims 2 to 6,
wherein intermediate elements (20) are arranged in/at the connection portions (16) and/or in/at the transfer portions (36),
wherein the intermediate elements (20) each have a first transmission portion (21) and a second transmission portion (22),
wherein the first transmission portion (21) is designed to transfer a torque about the axis of rotation (A) to the friction element (10), and
wherein the second transmission portion (22) is designed to transfer a torque about the axis of rotation (A) to the adapter element (30).

8. The brake rotor (1) as claimed in claim 7,
wherein the intermediate element (20) is oriented such that the main extent direction of the intermediate element (20) points in the axial direction (A).

9. The brake rotor (1) as claimed in claim 7 or 8,
wherein the first transmission portion (21) of the intermediate element (20) substantially corresponds to the shape of the connection portion (16), and/or
wherein the second transmission portion (22) of the intermediate element (20) substantially corresponds to the shape of the transfer portion (36).

10. The brake rotor (1) as claimed in either of claims 8 and 9,
wherein the first transmission portion (21) of the intermediate element (20) and/or the second transmission portion (22) of the intermediate element (20) are/is surface-hardened.

11. The brake rotor (1) as claimed in any of the preceding claims,
wherein the adapter element (30) is, in particular reversibly, clamped axially to the friction element (10) by fastening means (60).

12. The brake rotor (1) as claimed in claim 11,
comprising at least one clamping ring (62),
wherein the clamping ring (62) is arranged between the fastening means (60) and the adapter ring (30) and/or
wherein the clamping ring (62) is arranged between the fastening means (60) and the friction element (10),
wherein the clamping ring (62) is, at least in certain regions, rotationally symmetrical with respect to the axis of rotation (A).

13. The brake rotor (1) as claimed in any of the preceding claims, comprising a pole wheel (70), wherein the pole wheel (70) is composed of at least two elements which are formed from different materials.

14. The brake rotor (1) as claimed in claim 13,
wherein the ratio of the lower coefficient of thermal expansion to the higher coefficient of thermal expansion of the different materials lies in a range from 0.53 to 0.95.

## Revendications

1. Rotor de frein (1), en particulier pour véhicules utilitaires, comprenant au moins un élément de friction (10) et un élément adaptateur (30),
dans lequel
le rotor de frein (1) est conçu pour tourner autour d'un axe de rotation (A), l'élément de friction (10) présente au moins une surface de friction (12) et une zone de liaison (14),
l'élément adaptateur (30) comporte une zone de montage (32) et une zone de transfert (34),
la zone de montage (32) est conçue pour immobiliser le rotor de frein (1) sur un moyeu,
la zone de liaison (14) est en engagement avec la zone de transfert (34) directement ou indirectement par coopération de forme dans une direction périphérique (U) de telle sorte qu'un couple de rotation autour de l'axe de rotation (A) peut être transféré de l'élément de friction (10) à l'élément adaptateur (30) entre la zone de liaison (14) et la zone de transfert (34),
**caractérisé en ce que**
l'élément adaptateur (30) est réalisé en plusieurs pièces, en particulier dans la direction axiale (A) et/ou dans la direction périphérique (U).

2. Rotor de frein (1) selon la revendication 1,
dans lequel la zone de liaison (14) comprend au moins trois portions de liaison (16), et
la zone de transfert (34) comprend au moins trois portions de transfert complémentaires (36).

3. Rotor de frein (1) selon la revendication 2,
dans lequel les portions de liaison (16) ont chacune un jeu dans une direction radiale (R) par rapport aux portions de transfert complémentaires respectives (36).

4. Rotor de frein (1) selon l'une des revendications 2 à 3,
dans lequel les portions de liaison (16) s'étendent dans la direction axiale (A) à partir d'une face frontale axiale de l'élément de friction (X1, 10), et/ou les portions de transfert (36) s'étendent dans la direction axiale (A) à partir d'une face frontale axiale de l'élément adaptateur (X2, 30).

5. Rotor de frein (1) selon la revendication 3 ou 4,
dans lequel des éléments de renforcement (50) sont disposés sur les portions de liaison (16) et/ou sur les portions de transfert (36).

6. Rotor de frein (1) selon l'une des revendications 2 à 5,
dans lequel au moins une portion de liaison (16) forme un contour (K) sur la face frontale axiale de l'élément de friction (X1, 10), qui est ouvert radialement vers l'intérieur, et/ou
au moins une portion de transfert (36) forme un contour (K) sur la face frontale axiale de l'élément adaptateur (X2, 30), qui est ouvert radialement vers l'extérieur.

7. Rotor de frein (1) selon l'une des revendications 2 à 6,
dans lequel des éléments intermédiaires (20) sont disposés dans/sur les portions de liaison (16) et/ou dans/sur les portions de transfert (36),
lesdits éléments intermédiaires (20) comprennent chacun une première portion de transmission (21) et une seconde portion de transmission (22), ladite première portion de transmission (21) étant conçue pour transmettre un couple de rotation autour dudit axe de rotation (A) à l'élément de friction (10), et
la seconde portion de transmission (22) est conçue pour transmettre un couple de rotation autour de l'axe de rotation (A) à l'élément adaptateur (30).

8. Rotor de frein (1) selon la revendication 7,
dans lequel l'élément intermédiaire (20) est orienté de telle sorte que la direction d'extension principale de l'élément intermédiaire (20) est dirigée dans la direction axiale (A).

9. Rotor de frein (1) selon la revendication 7 ou 8,
dans lequel la première portion de transmission (21) de l'élément intermédiaire (20) correspond sensiblement à la forme des portions de liaison (16), et/ou
la seconde portion de transmission (22) de l'élément intermédiaire (20) correspond sensiblement à la forme de la portion de transfert (36).

10. Rotor de frein (1) selon l'une des revendications 8 à 9,
dans lequel la première portion de transmission (21) de l'élément intermédiaire (20) et/ou la seconde portion de transmission (22) de l'élément intermédiaire (20) est/sont durcie(s) en surface.

11. Rotor de frein (1) selon l'une des revendications précédentes,
dans lequel l'élément adaptateur (30) est serré axialement, en particulier de manière réversible, sur l'élément de friction (10) par des moyens de fixation (60).

12. Rotor de frein (1) selon la revendication 11,
comprenant au moins une bague de serrage (62),
la bague de serrage (62) étant disposée entre le moyen de fixation (60) et la bague d'adaptateur (30), et/ou
la bague de serrage (62) étant disposée entre le moyen de fixation (60) et l'élément de friction (10),
la bague de serrage (62) étant au moins localement à symétrie de révolution par rapport à l'axe de rotation (A).

13. Rotor de frein (1) selon l'une des revendications précédentes,
comprenant une roue polaire (70), la roue polaire (70) étant constituée d'au moins deux éléments qui sont formés de matériaux différents.

14. Rotor de frein (1) selon la revendication 13,
dans lequel le rapport entre le plus petit coefficient de dilatation thermique et le plus grand coefficient de dilatation thermique des différents matériaux se situe dans une plage de 0,53 à 0,95.
